# EUROPÄISCHE PATENTANMELDUNG

(11) **EP 3 567 015 A1**
(43) Veröffentlichungstag der Anmeldung: **13.11.2019**
(21) Anmeldenummer: 19172760.1
(22) Anmeldetag: 06.05.2019
(51) Int. Cl.: C04B 22/00, C04B 24/00, C04B 16/00, C04B 16/02, C04B 18/00, C04B 18/04, C04B 18/18, C04B 18/24, E04B 1/00

(54) **TONZIEGEL**

(30) Priorität: 08.05.2018 AT 10318 U
(71) Anmelder: Steindorfer, Walter, 9341 Strassburg (AT)
(72) Erfinder: Steindorfer, Walter, 9341 Strassburg (AT)
(74) Vertreter: Beer & Partner Patentanwälte KG

(57) **Zusammenfassung**

Gezeigt und beschrieben wird ein gefüllter, porosierter, gebrannter Tonziegel (1) mit Hohlräumen (2). Die Hohlräume (2) (Kammern) sind mit einem zementgebundenen Altpapierbrei (3) gefüllt und es liegt nach der Trockenzeit ein kompakter, stabiler Baustein vor.

## Beschreibung

Die Erfindung betrifft einen gebrannten, porosierten Hohllochziegel aus Ton.

Der Erfindung liegt die Aufgabe zu Grunde einen Hohllochziegel zur Verfügung zu stellen, dessen Isoliereigenschaften verbessert sind.

Um einen Hohllochziegel der eingangs genannten Gattung zu verbessern, werden die Hohlräume (Kammern) des Hohllochziegels mit einem zementgebundenen Altpapierbrei gefüllt.

Der Altpapierbrei, welcher in die Hohlräume des Hohllochziegels eingebracht wird, besteht im Prinzip aus Zellulose.

Nachdem der in die Hohlräume eingebrachte Altpapierbrei getrocknet ist, also nach einer Trockenzeit, entsteht ein kompakter, stabiler Baustein.

Die Füllung für den Baustein (porosierter Tonziegel) wird folgendermaßen hergestellt:
Zerkleinertes Altpapier wird in einen Behälter gegeben und mit reichlich Wasser versetzt. Mit der Zeit wird das Altpapier aufgeweicht und durch mechanisches Bearbeiten (beispielsweise Rühren) entsteht eine breiige Masse.

Die so erhaltene breiige Masse wird mit Zement gemischt, wobei ein Mischverhältnis wie folgt gewählt wird:
Zwei Gewichtsteile Altpapierbrei und ein Gewichtsteil Zement.

Das Mischungsverhältnis zwischen Zement und Altpapierbrei kann geändert werden, beispielsweise wenn man eine festere Masse erhalten will.

Ein erfindungsgemäßer gebrannter, porosierter Tonziegel ist in den Zeichnungen gezeigt. Es zeigt:

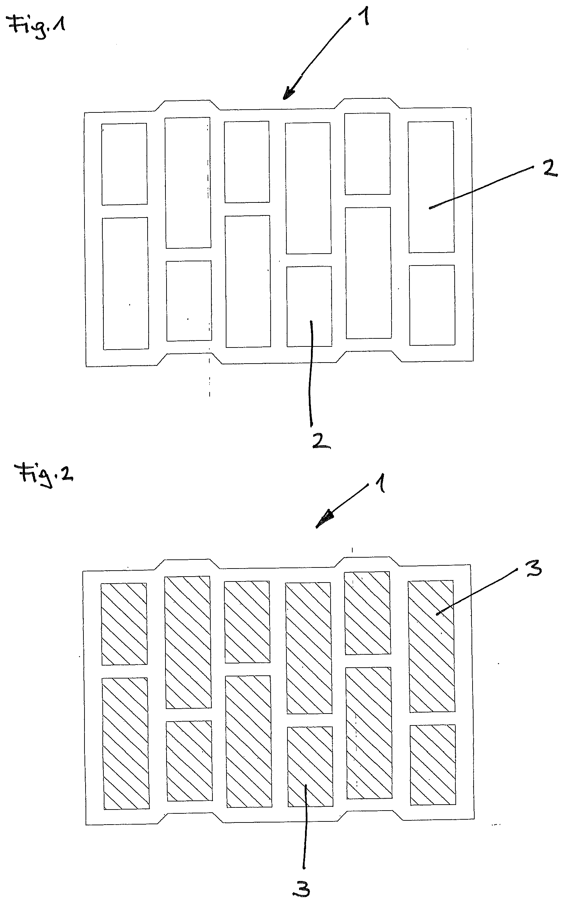

- Fig. 1: einen gelochten Tonziegel ohne Füllung,
- Fig. 2: einen gelochten Tonziegel mit Füllung.

In den Hohlräumen 2 eines Hohllochziegels 1 ist eine Füllung aus zementgebundenem Altpapierbrei 3, der abgebunden ist, enthalten. Die Füllung aus Altpapierbrei 3 füllt die Hohlräume 2 des Hohllochziegels 1 im gezeigten Ausführungsbeispiel vollständig aus.

## Patentansprüche

1. Gebrannter, porosierter Hohllochziegel (1) aus Ton, **gekennzeichnet durch** eine in den Hohlräumen (2) angeordnete Füllung aus zementgebundenem Altpapierbrei (3).

2. Hohllochziegel nach Anspruch 1, **dadurch gekennzeichnet, dass** die Füllung aus zementgebundenem Altpapierbrei (3) aus zwei Gewichtsteilen Altpapierbrei und einem Gewichtsteil Zement besteht.

3. Hohllochziegel nach Anspruch 1 oder 2, **dadurch gekennzeichnet, dass** die Füllung aus zementgebundenem Altpapierbrei (3) die Hohlräume (2) vollständig ausfüllt.
